# EUROPEAN PATENT APPLICATION

(11) **EP 4 797 480 A1**
(43) Date of publication of application: **26.08.2026**
(21) Application number: 24878387.0
(22) Date of filing: 12.04.2024
(51) Int. Cl.: H02J 3/28, H02J 3/38

(54) **BLACK START METHOD AND POWER GENERATION SYSTEM**

(30) Priority: 18.10.2023 CN 202311355877
(71) Applicant: Sungrow Power Supply Co., Ltd., Hefei, Anhui 230088 (CN)
(72) Inventor: PAN, Tao, Hefei, Anhui 230088 (CN); JIANG, Tao, Hefei, Anhui 230088 (CN); GENG, Houlai, Hefei, Anhui 230088 (CN); CHEN, Peng, Hefei, Anhui 230088 (CN); DONG, Puyun, Hefei, Anhui 230088 (CN); SHEN, Zhi, Hefei, Anhui 230088 (CN); FENG, Wei, Hefei, Anhui 230088 (CN)
(74) Representative: Rooney, John-Paul
(86) International application number: PCT/CN2024/087413
(87) International publication number: WO 2025/081733

(57) **Abstract**

The present application discloses a black start (BS) method and a power generation system. The method comprises: a BS controller or an energy management system (EMS) sending, to black-started power conversion systems (PCSs), an instruction of boosting to a first preset voltage, wherein alternating current sides of the black-started PCSs are connected in parallel together to connect a load, and the first preset voltage is less than a second preset voltage; when the BS controller or the EMS detects that the voltages of the black-started PCSs reach the first preset voltage, issuing a load input instruction; and once the load is input, sending a boost instruction to all the black-started PCSs, so that the voltages of all the black-started PCSs rise from the first preset voltage to the second preset voltage. The solution can successfully input the load, so that the BS is successful.

## Description

This application claims the priority to Chinese Patent Application No. 202311355877.8, titled "BLACK START METHOD AND POWER GENERATION SYSTEM", filed on October 18, 2023 with the China National Intellectual Property Administration, which is incorporated herein by reference in its entirety.

### FIELD

The present disclosure relates to the technical field of power electronics, and in particular to a black start method and a power generation system.

### BACKGROUND

To improve the flexibility of power supply and the load-carrying capacity of a power system, the new energy power generation system, after entering an off-grid mode, is started to supply power to the load. The process in which the generating units in the new energy power generation system transition from a powerless state to restarting and reconnecting to the power grid or establishing a connection to a power grid is referred to as black start.

The power generation system includes a local controller (LC), an energy management system EMS, and a black start (BS) controller, and further includes multiple power conversion systems (PCS). Alternating-current sides of the multiple power conversion systems are connected with each other in parallel. The LC is configured to control all the PCSs.

During the start-up process of a black start system, high power peaks of some loads exceed the total power of all PCSs when loading is applied. This results in large inrush currents of the PCS at the moment of startup, which far surpass the rated current of the PCS, preventing successful load application and resulting in black-start failure.

### SUMMARY

In view of this, a black start method and a power generation system are provided according to the present disclosure, to achieve successful load connection and a successful black start.

According to embodiments of the present disclosure, a black start method is provided. The method includes:
transmitting, by a black-start controller BS or an energy management system EMS, an instruction to ramp a voltage up to a first preset voltage to each of power conversion systems PCSs subject to a black-start process, wherein alternating-current sides of the PCSs subject to the black-start process are connected with each other in parallel for connecting a load; and
detecting, by the black-start controller BS or the energy management system EMS, that the voltage of each of the PCSs subject to the black-start process ramps up to the first preset voltage, transmitting a load-connecting instruction, and transmitting, after the load is connected, a voltage-ramping instruction to each of the PCSs subject to the black-start process, to cause the voltage of each of the PCSs subject to the black-start process to ramp from the first preset voltage to a second preset voltage, wherein the first preset voltage is less than the second preset voltage.

Optionally, before the detecting that the voltage of each of the PCSs subject to the black-start process ramps up to the first preset voltage, the method further includes:
transmitting, on receiving first black-start instructions from all the PCSs subject to the black-start process, a second black-start instruction to each of the PCSs subject to the black-start process, and suspending for receiving the second black-start instructions fed back from all the PCSs subject to the black-start process.

Optionally, the transmitting, on receiving first black-start instructions from all the PCSs subject to the black-start process, a second black-start instruction to each of the PCSs subject to the black-start process, and waiting for receiving the second black-start instructions fed back from all the PCSs subject to the black-start process includes:
receiving the first black-start instruction fed back from a master PCS, and receiving the first black-start instruction fed back from a slave PCS, wherein all the PCSs includes the one master PCS and the slave PCS with the number of at least one; and
transmitting the second black-start instruction to each of the at least one slave PCS, receiving, by the BS, the second black-start instruction fed back from the at least one slave PCS, then transmitting the second black-start instruction to the master PCS, and suspending for receiving the second black-start instruction fed back from the master PCS.

Optionally, the detecting that the voltage of each of the power conversion systems PCS subject to the black-start process ramps up to the first preset voltage and transmitting a load-connecting instruction to the energy management system includes:
detecting that the voltage of each of the power conversion systems PCS ramps up to the first preset voltage and remains at the first preset voltage, receiving fourth black-start instructions transmitted by all the PCSs, and transmitting the load-connecting instruction to the energy management system.

Optionally, the transmitting, after the load is connected, a voltage-ramping instruction to each of the PCSs subject to the black-start process includes:
detecting that a total apparent power of all the PCSs is greater than a preset power threshold, suspending, by the BS, for detecting that the total apparent power falls below a preset apparent power, transmitting the voltage-ramping instruction to each of the PCSs, wherein the power threshold is greater than the preset apparent power.

An embodiment of the present disclosure also provides a power generation system, including:
a plurality of power conversion systems PCS; and
a black-start controller BS or an energy management system EMS, wherein
all or part of the plurality of PCSs are subject to a black start process, and alternating-current sides of the PCSs subject to the black start process are connected with each other in parallel for connecting a load,
the BS or the EMS is configured to transmit an instruction to ramp a voltage up to a first preset voltage to each of the power conversion systems PCS subject to the black-start process, the alternating-current sides of the PCS subject to the black-start process are connected with each other in parallel for connecting the load,
the black-start controller BS or the energy management system EMS is configured to detect that the voltage of each of the PCSs subject to the black-start process ramps up to the first preset voltage, transmit a load-connecting instruction to the energy management system; and transmit, after the load is applied, a voltage-ramping instruction to each of the PCSs subject to the black-start process, to cause the voltage of each of the PCSs subject to the black-start process to ramp from the first preset voltage to the second preset voltage, wherein the first preset voltage is less than a second preset voltage.

Optionally, the BS or the EMS is further configured to: before the BS or the EMS detects that the voltage of each of the PCSs subject to the black-start process ramps up to the first preset voltage, transmit, on receiving first black-start instructions from all the PCSs subject to the black-start process, a second black-start instruction to each of the PCSs subject to the black-start process, and suspend for receiving the second black-start instructions fed back from all the PCSs subject to the black-start process.

Optionally, the BS or the EMS transmits, on receiving first black-start instructions from all the PCSs subject to the black-start process, a second black-start instruction to each of the PCSs subject to the black-start process, and suspends for receiving the second black-start instructions fed back from all the PCSs subject to the black-start process as follows:
the BS receives the first black-start instruction fed back from a master PCS, and receives the first black-start instruction fed back from a slave PCS, wherein all the PCSs include the one master PCS and the slave PCS with the number of at least one; and
the BS or the EMS transmits the second black-start instruction to each of the at least one slave PCS, the BS receives the second black-start instruction fed back from the at least one slave PCS, then transmits the second black-start instruction to the master PCS, and suspends for receiving the second black-start instruction fed back from the master PCS.

Optionally, the black-start controller BS or the EMS detects that the voltage of each of the PCSs subject to the black-start process ramps up to the first preset voltage and transmits a load-connecting instruction to the energy management system as follows:
the BS or the EMS detects that the voltage of each of the PCSs ramps up to the first preset voltage and remains at the first preset voltage, receives fourth black-start instructions transmitted by all the PCSs subject to the black-start process, and transmits the load-connecting instruction to the energy management system.

Optionally, the BS or the EMS transmits, after the load is applied, a voltage-ramping instruction to each of the PCSs subject to the black-start process as follows:
the BS or the EMS detects that the total apparent power of all the PCSs is greater than a preset power threshold, the BS suspends for detecting that the total apparent power falls below a preset apparent power and transmits the voltage-ramping instruction to each of the PCSs, wherein the power threshold is greater than the preset apparent power.

It can be seen that the present disclosure has following advantages.

During the black-start process, the voltage of the each PCS is controlled to ramp up to a first preset voltage that is less than a second preset voltage during the black-start process. When the PCS remains its voltage level at the first preset voltage, the load is connected. After the load is connected, the voltage of the PCS is further controlled to ramp from the first preset voltage to the second preset voltage. The first preset voltage is less than the second preset voltage, and thus, when the load is connected during the stage where the PCS operates at the first preset voltage, even if there is a large inrush current from the load, a total apparent power of the power generation system is not excessively high and does not exceed the total apparent power of all PCSs. In this case, large inrush currents on the PCSs are prevented, to achieve a successful black start.

### BRIEF DESCRIPTION OF THE DRAWINGS

FIG. 1 is a schematic diagram of a power generation system according to an embodiment of the present disclosure;
FIG. 2 is a flowchart of a black start method according to an embodiment of the present disclosure;
FIG. 3 is a schematic diagram of a reduced-voltage black start of PCS according to an embodiment of the present disclosure;
FIG. 4 is a flowchart of a black start method according to another embodiment of the present disclosure; and
FIG. 5 is a schematic diagram of a power generation system according to an embodiment of the present disclosure.

### DETAILED DESCRIPTION

To enable those skilled in the art to better understand and implement the technical solutions according to the embodiments of the present disclosure, application scenarios are described below in conjunction with the drawings.

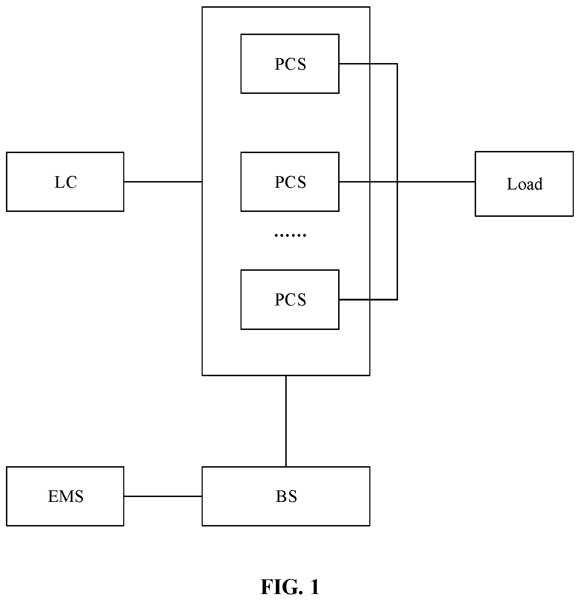

Reference is made to FIG. 1, which is a schematic diagram of a power generation system according to an embodiment of the present disclosure.

The power generation system according to the embodiment of the present disclosure includes: an energy management system EMS, a local controller LC, a black-start controller BS, and multiple power conversion systems PCSs. In the embodiment of the present disclosure, the quantity of PCSs is not limited. Alternating-current sides of all the PCSs are connected with each other in parallel for connecting a load. The BS is configured to control the PCSs.

In black-start solutions in the related art, each PCS outputs at a second preset voltage level. When the load is connected to the PCS, a large inrush current occurs, causing the total power to exceed the rated current of the PCS and resulting in black-start failure.

To address the above technical issues, the power generation system according to the embodiment of the present disclosure employs a black start method as follows. During a black-start process, the voltage of each PCS is firstly controlled to ramp up to a first preset voltage, and then the load is connected. After the load is connected, the voltage of the PCS is further controlled to ramp from the first preset voltage to the second preset voltage. The first preset voltage is less than the second preset voltage, and thus, when a large inrush current flows from the load, a total apparent power cannot exceed the total apparent power of all the PCSs, to prevent from generating large inrush currents on the PCSs, thereby achieving a successful black start.

Hereinafter embodiments of the present disclosure are described in detail in conjunction with the drawings to clarify and elucidate objectives, features, and advantages of the present disclosure.

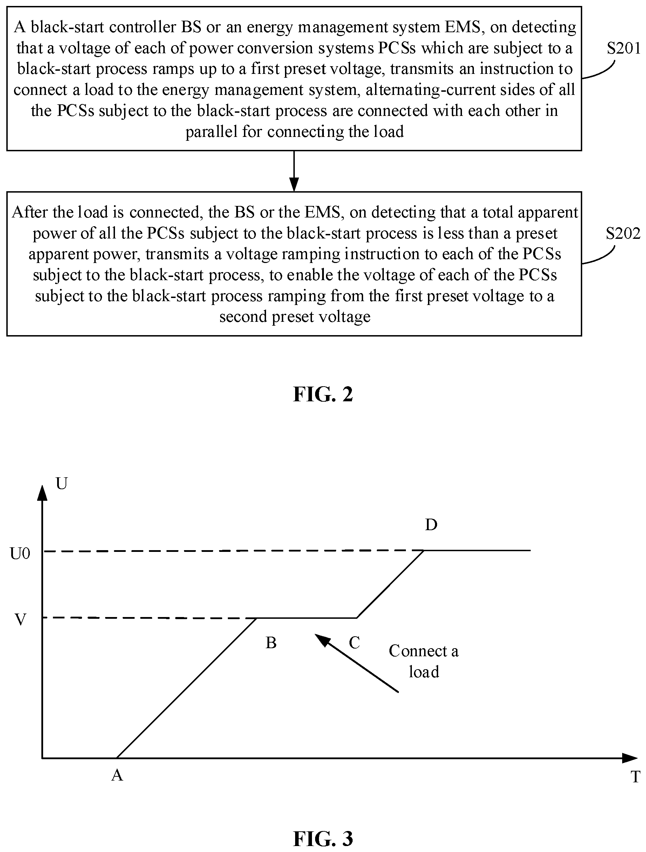

Reference is made to FIG. 2, which is a flowchart of a black start method according to an embodiment of the present disclosure.

The black start method according to the embodiment of the present disclosure includes: steps S201 and S202.

In step S201, a black-start controller BS or an EMS transmits an instruction to ramp a voltage up to a first preset voltage to each of power conversion systems PCSs subject to a black-start process, alternating-current sides of the PCSs subject to the black-start process are connected with each other in parallel for connecting a load, and the first preset voltage is less than a second preset voltage. The value of the second preset voltage is not limited in the embodiment of the present disclosure, and is typically set to the rated voltage of PCS.

To facilitate understanding, the following embodiments of the present disclosure take an example of the BS transmitting various instructions to the PCS. The system and method according to the embodiments of the present disclosure may exclude the BS and include only the EMS, in which the EMS transmits various instructions to the PCS. When the system includes both the EMS and the BS, it is the BS transmitting instructions to the PCS.

It should be understood that the power generation system according to the embodiment of the present disclosure can be a new energy system, including photovoltaic, energy storage, wind power, or the like. The black start is performed in an off-grid mode, i.e., being started without power. The EMS of the power generation system sets the off-grid mode, which enables the black-start process. Additionally, the EMS sets the inverter voltage and frequency values for the PCSs and transmits them to the LC, and then the LC synchronously transmits them to each PCS. The EMS can also set the minimum quantity of the PCSs subject to the black-start process. That is, a part of the PCSs in the power generation system are subject to the black-start process while others are not, or all PCSs perform black start, which is not limited in the embodiments of the present disclosure.

During the black-start process, each PCS can be identified as a master PCS or a slave PCS, and the load is controlled to be connected only when each of voltages of the master PCS and the slave PCS ramps up to the first preset voltage.

It should be understood that for PCS, the devices powered by the PCS are all loads.

In step S202, the black-start controller BS detects that the voltage of each of the PCSs subject to the black-start process ramps up to the first preset voltage, transmits to the energy management system a load-connecting instruction, and after the load is connected, the BS transmits a voltage-ramping instruction to each of the PCSs subject to the black-start process, to cause the voltage of each of the PCSs subject to the black-start process to ramp from the first preset voltage to the second preset voltage.

Reference is made to FIG. 3, which is a schematic diagram of a reduced-voltage black start of PCS according to an embodiment of the present disclosure.

In FIG. 3, the horizontal axis represents time T, and the vertical axis represents the voltage U of each PCS. Line segment AB indicates the ramping of the PCS, i.e., from 0 to the first preset voltage V. Line segment BC indicates a voltage plateau phase, i.e., the voltage remains constant at the first preset voltage V. The load is connected during the segment BC. After the load is connected, the voltage of the PCS continues to ramp, as indicated by line segment CD, up to the second preset voltage U0 at point D.

During a black-start process in the related art, the load is connected after the voltage of the PCS ramps up to the second preset voltage U0. Thus, the power is excessively high, exceeding the power capacity of the PCSs and resulting in black-start failure.

In the black start method according to the embodiments of the present disclosure, the voltage of the each PCS is controlled to ramp up to a first preset voltage that is less than a second preset voltage during the black-start process. When the PCS remains its voltage level at the first preset voltage, the load is connected. After the load is connected, the voltage of the PCS is further controlled to ramp from the first preset voltage to the second preset voltage. The first preset voltage is less than the second preset voltage, and thus, when the load is connected during the stage where the PCS operates at the first preset voltage, even if there is a large inrush current from the load, a total apparent power of the power generation system is not excessively high and does not exceed the total apparent power of all PCSs. In this case, large inrush currents on the PCSs are prevented, to achieve a successful black start.

To prevent the PCS from experiencing large inrush currents, the BS controls the voltage of the PCS to ramp from the first preset voltage to the second preset voltage only when the total apparent power of the power generation system is less than the preset apparent power threshold. When the total apparent power of all the PCSs subject to the black-start process is greater than or equal to the preset apparent power, the system suspends for ramp down of the total apparent power of all the PCSs subject to the black-start process. This is because the inrush current generated during load connection ramps down over time, leading to a corresponding ramp down in the total apparent power.

In the black start method according to an embodiment of the present disclosure, the process of transmitting, after the load is connected, a voltage-ramping instruction to each of the PCSs subject to the black-start process may be implemented as follows. The BS detects that a total apparent power of all the PCSs is greater than a preset power threshold, suspends for detecting that the total apparent power of all the PCSs falls below a preset apparent power, and transmits the voltage-ramping instruction to each of the PCSs. The power threshold is greater than the preset apparent power.

To achieve a successful black-start process and protect the PCSs from excessive inrush currents, the PCSs are not immediately controlled to ramp its voltage up to the second preset voltage after the load is connected. Instead, the total apparent power of the power generation system is detected. For example, when the load is initially connected, the total apparent power of all PCSs may be relatively high, e.g., may exceed 75% of the rated apparent power Pn. In such cases, the system enters a suspending period until the total apparent power of all PCSs falls below the preset apparent power, and transmits the voltage-ramping instruction to each of the PCSs. Then, the voltage of the PCS is ramped up from the first preset voltage to the second preset voltage. For example, the preset apparent power may be set at 25% of Pn. These values are provided as examples for illustration only and may vary according to actual requirements.

Hereinafter, a specific implementation method is described with reference to the drawings.

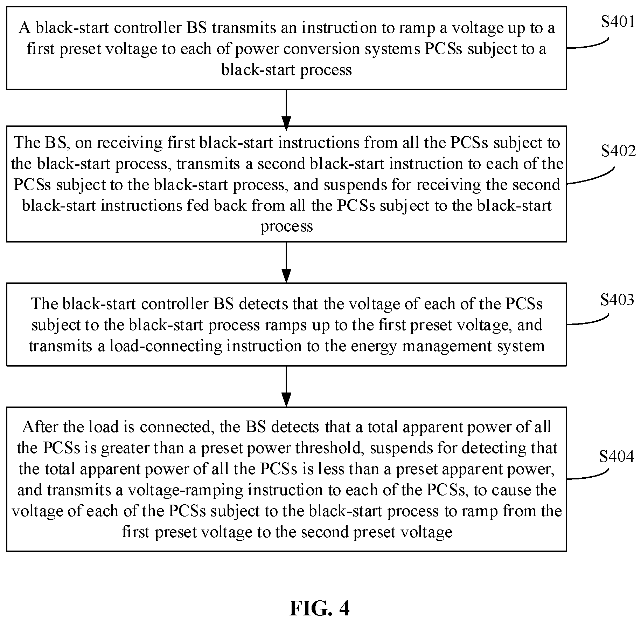

Reference is made to FIG. 4, which is a flowchart of a black start method according to another embodiment of the present disclosure.

The black start method according to the embodiment of the present disclosure includes: steps S401 to S404.

In step S401, a black-start controller BS transmits an instruction to ramp a voltage up to a first preset voltage to each of power conversion systems PCSs subject to a black-start process.

In step S402, the BS, on receiving first black-start instructions from all the PCSs subject to the black-start process, transmits a second black-start instruction to each of the PCSs subject to the black-start process, and suspends for receiving the second black-start instruction fed back from all the PCSs subject to the black-start process.

The specific forms of the black-start instructions are not limited in the embodiment of the present disclosure. Each black-start instruction is to achieve synchronization among various PCSs, that is, it serves as a synchronous beat signal.

The PCSs subject to a black-start process include a master PCS and a slave PCS.

In an embodiment, the BS receives the first black-start instruction fed back from the master PCS, and receives the the first black-start instruction fed back from the slave PCS. All the PCSs include the one master PCS and the slave PCS with the number of at least one.

The BS transmits a second black-start instruction to the at least one slave PCS, transmits, on receiving the second black-start instruction fed back from the at least one slave PCS, the second black-start instruction to the master PCS, and suspends for receiving the second black-start instruction fed back from the master PCS.

The BS suspends for receiving the second black-start instructions fed back from the PCSs subject to the black-start process before proceeding to the next step. In the black start method according to the embodiments of the present disclosure, the BS firstly transmits the second black-start instruction to the slave PCS and then transmits the second black-start instruction to the master PCS.

In step S403, the black-start controller BS detects that the voltage of each of the PCSs subject to the black-start process ramps up to the first preset voltage, and transmits a load-connecting instruction to the energy management system.

When the voltage of each of the power conversion systems PCSs ramps up to the first preset voltage and each of the PCSs remains its voltage level at the first preset voltage, the BS receives fourth black-start instructions transmitted by all the PCSs, and transmits the load-connecting instruction to the EMS. The BS waits for the EMS to connect the load. The EMS, on detecting that the BS is in the state of waiting for connecting the load, connects the load.

In step S404, after the load is connected, the BS detects that a total apparent power of all the PCSs is greater than a preset power threshold, suspends for detecting that the total apparent power of all the PCSs is less than a preset apparent power, and transmits a voltage-ramping instruction to each of the PCSs, to cause the voltage of each of the PCSs subject to the black-start process to ramp from the first preset voltage to the second preset voltage. The power threshold is greater than the preset apparent power.

After transmitting the voltage-ramping instruction to each of the PCSs subject to a black-start process, the BS receives third black-start instructions fed back from all the PCSs subject to the black-start process, indicating that the black-start process of the PCSs is completed. The BS sets all the PCSs as slave PCSs, and the LC begins to respond to the power dispatching instruction from the EMS.

In the black start method according to the embodiments of the present disclosure, when each of the PCSs ramps its voltage up to the first preset voltage, the load is connected, which may cause a large inrush current. The system suspends until the inrush load decreases and stabilizes, the startup of the inrush load is completed. For example, in an embodiment, after the BS detects the end of the peak load current and detects that the total apparent power of all the PCSs is less than a preset apparent power, the BS transmits a black-start voltage-ramping instruction to each of the PCSs. The PCS, on receiving black-start voltage-ramping instruction, controls its voltage to ramp up to the second preset voltage.

Based on the black start method according to the above embodiments, a power generation system is further provided according to an embodiment of the present disclosure, which is described in detail in conjunction with the drawings.

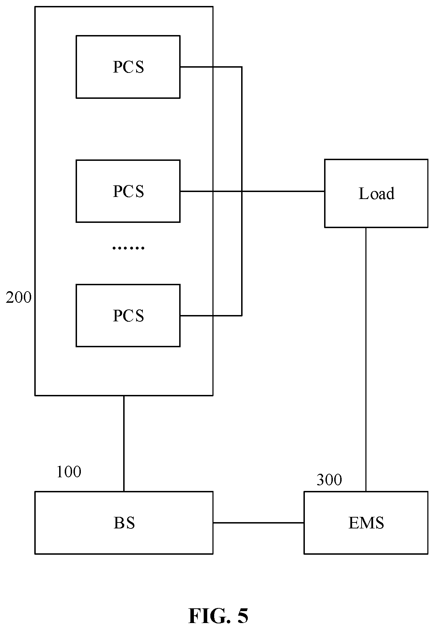

Reference is made to FIG. 5, which is a schematic diagram of a power generation system according to an embodiment of the present disclosure.

The power generation system according to the embodiment of the present disclosure includes: a black-start controller BS 100 and multiple power conversion systems PCS 200. All or a part of the multiple PCSs are subject to a black-start process, and alternating-current sides of the PCSs subject to the black-start process are connected with each other in parallel for connecting a load.

The BS 100 is configured to transmit an instruction to ramp a voltage up to a first preset voltage to each of power conversion systems PCS 200 subject to a black-start process. Alternating-current sides of the PCSs subject to the black-start process are connected with each other in parallel for connecting a load. The first preset voltage is less than a second preset voltage of the PCS.

It should be understood that the power generation system according to the embodiment of the present disclosure can be a new energy system, including photovoltaic, energy storage, wind power, or the like. The black start is performed in an off-grid mode, i.e., being started without power. The EMS of the power generation system sets the off-grid mode, which enables the black-start process. Additionally, the EMS sets the inverter voltage and frequency values and transmits them to the LC, and then the LC synchronously transmits them to each PCS. The EMS can also set the minimum quantity of the PCSs subject to the black-start process. That is, a part of the PCSs in the power generation system are subject to the black-start process while others are not, or all PCSs perform black start, which is not limited in the embodiments of the present disclosure.

The BS 100 is configured to: detect that the voltage of each of the PCSs subject to the black-start process ramps up to the first preset voltage, transmits to the energy management system a load-connecting instruction, and after the load is connected, transmits a voltage-ramping instruction to each of the PCSs subject to the black-start process, to cause the voltage of each of the PCSs subject to the black-start process to ramp from the first preset voltage to the second preset voltage.

EMS 300 is configured to control the load to be connected. The BS 100 is in communication with the EMS 300.

In the black start method according to the embodiments of the present disclosure, the voltage of the PCSs is controlled to ramp up to a first preset voltage that is less than a second preset voltage during a black start process. When the PCS remains its voltage level at the first preset voltage without further change, the load is connected. After the load is connected, the voltage of the PCSs is further controlled to ramp from the first preset voltage to the second preset voltage. The first preset voltage is less than the second preset voltage. Thus, when the load is connected during the stage where the PCS operates at the first preset voltage, even if there is a large inrush current from the load, a total apparent power of the power generation system is not excessively high and does not exceed the total apparent power of all PCSs. In this case, large inrush currents on the PCSs are prevented, to achieve a successful black start.

Before the black-start controller BS detects that the voltage of each of the PCSs subject to the black-start process ramps up to the first preset voltage, the BS is further configured to: transmit, on receiving first black-start instructions from all the PCSs subject to the black-start process, a second black-start instruction to each of the PCSs subject to the black-start process, and suspend for receiving the second black-start instructions fed back from each of the PCSs subject to the black-start process.

The BS transmits, on receiving first black-start instructions from all the PCSs subject to the black-start process, a second black-start instruction to each of the PCSs subject to the black-start process, and suspends for receiving the second black-start instructions fed back from all the PCSs subject to the black-start process as follows:
the BS receives a first black-start instruction fed back from a master PCS, and receives the first black-start instruction fed back from a slave PCS, wherein all the PCSs include one master PCS and the slave PCS with the number of at least one; and
the BS transmits a second black-start instruction to the at least one slave PCS, transmits, on receiving the second black-start instruction fed back from the at least one slave PCS, the second black-start instruction to the master PCS, and suspends for receiving the second black-start instruction fed back from the master PCS.

The black-start controller BS, on detecting that the voltage of each of the PCSs subject to the black-start process ramps up to the first preset voltage, transmits a load-connecting instruction to the energy management system as follows:

When the voltage of each of the power conversion systems PCSs subject to the black-start process ramps up to the first preset voltage and each of the PCSs subject to the black-start process remains its voltage level at the first preset voltage, the BS receives fourth black-start instructions transmitted by all the PCSs subject to the black-start process, and transmits the load-connecting instruction to the energy management system.

To prevent the PCS from experiencing large inrush currents, the BS controls the voltage of the PCS to ramp from the first preset voltage to the second preset voltage only when the total apparent power of the power generation system is less than the preset apparent power threshold. When the total apparent power of all the PCSs subject to the black-start process is greater than or equal to the preset apparent power, the system suspends for ramp down of the total apparent power of all the PCSs subject to the black-start process. This is because the inrush current generated during load connection ramps down over time, leading to a corresponding ramp down in the total apparent power.

To achieve a successful black-start process and protect the PCS from excessive inrush currents, the PCS is not immediately controlled to ramp its voltage to the second preset voltage after the load is connected. Instead, the total apparent power of the power generation system is detected. For example, when the load is initially connected, the total apparent power of all PCSs may be relatively high, e.g., may exceed 75% of the rated apparent power Pn. In such cases, the system enters a suspending period until the total apparent power of all PCSs falls below the preset apparent power, and transmits the voltage-ramping instruction to each of the PCSs. Thus, the voltage of the PCS is ramped up from the first preset voltage to the second preset voltage. For example, the preset apparent power may be set at 25% of Pn. These values are provided as examples for illustration only and may vary according to actual requirements.

The black-start controller BS, on detecting that a total apparent power of the PCSs subject to the black-start process is less than a preset apparent power, transmits a load-connecting instruction to the energy management system as follows:

The BS, on detecting that the total apparent power of all the PCSs is greater than a preset power threshold, suspends for detecting that the total apparent power falls below the preset apparent power, and transmits the voltage-ramping instruction to each of the PCSs, where the power threshold is greater than the preset apparent power.

To achieve a successful black-start process and protect the PCS from excessive inrush currents, the PCS is not immediately controlled to ramp its voltage to the second preset voltage after the load is connected. Instead, the total apparent power of the power generation system is detected. For example, when the load is initially connected, the total apparent power of all PCSs may be relatively high, e.g., may exceed 75% of the rated apparent power Pn. In such cases, the system enters a suspending period until the total apparent power of all PCSs falls below the preset apparent power, and transmits the voltage-ramping instruction to each of the PCSs. Thus, the voltage of the PCS is ramped up from the first preset voltage to the second preset voltage. For example, the preset apparent power may be set at 25% of Pn. These values are provided as examples for illustration only and may vary according to actual requirements.

In the power generation system according to the embodiments of the present disclosure, when the voltage of each PCS ramps its voltage up to the first preset voltage and the load is connected to PCS, which may cause a large inrush current. The system suspends until the inrush load decreases and stabilizes, the startup of the inrush load is completed. For example, in an embodiment, after the BS detects the end of the peak load current and detects that the total apparent power of all the PCSs is less than a preset apparent power, the BS transmits a black-start voltage-ramping instruction to each of the PCSs. The PCS, on receiving black-start voltage-ramping instruction, controls its voltage to ramp up to the second preset voltage.

The embodiments of the present disclosure are described in a progressive manner, and each embodiment places emphasis on the difference from other embodiments. Therefore, one embodiment can refer to other embodiments for the same or similar parts. The system or device disclosed in the embodiments corresponds to the method disclosed in the embodiments, and therefore are described in a relatively simple way.

According to the description of the disclosed embodiments, those skilled in the art can implement or use the present disclosure. Various modifications to the embodiments are obvious to those skilled in the art, and general principles defined in the present disclosure can be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. A black start method, comprising:
transmitting, by a black-start controller BS or an energy management system EMS, an instruction to ramp a voltage up to a first preset voltage to each of power conversion systems PCSs subject to a black-start process, wherein alternating-current sides of the PCSs subject to the black-start process are connected with each other in parallel for connecting a load; and
detecting, by the black-start controller BS or the energy management system EMS, that the voltage of each of the PCSs subject to the black-start process ramps up to the first preset voltage, transmitting a load-connecting instruction, and transmitting, after the load is connected, a voltage-ramping instruction to each of the PCSs subject to the black-start process, to cause the voltage of each of the PCSs subject to the black-start process to ramp from the first preset voltage to a second preset voltage, wherein the first preset voltage is less than the second preset voltage.

2. The black start method according to claim 1, wherein before the detecting that the voltage of each of the PCSs subject to the black-start process ramps up to the first preset voltage, the method further comprises:
transmitting, on receiving first black-start instructions from all the PCSs subject to the black-start process, a second black-start instruction to each of the PCSs subject to the black-start process, and suspending for receiving the second black-start instructions fed back from all the PCSs subject to the black-start process.

3. The black start method according to claim 2, wherein the transmitting, on receiving first black-start instructions from all the PCSs subject to the black-start process, a second black-start instruction to each of the PCSs subject to the black-start process, and waiting for receiving the second black-start instructions fed back from all the PCSs subject to the black-start process comprises:
receiving the first black-start instruction fed back from a master PCS, and receiving the first black-start instruction fed back from a slave PCS, wherein all the PCSs comprise the one master PCS and the slave PCS with the number of at least one; and
transmitting the second black-start instruction to each of the at least one slave PCS, receiving, by the BS, the second black-start instruction fed back from the at least one slave PCS, then transmitting the second black-start instruction to the master PCS, and suspending for receiving the second black-start instruction fed back from the master PCS.

4. The black start method according to claim 1, wherein the detecting that the voltage of each of the power conversion systems PCS subject to the black-start process ramps up to the first preset voltage and transmitting a load-connecting instruction to the energy management system comprises:
detecting that the voltage of each of the power conversion systems PCS ramps up to the first preset voltage and remains at the first preset voltage, receiving fourth black-start instructions transmitted by all the PCSs, and transmitting the load-connecting instruction to the energy management system.

5. The black start method according to claim 1, wherein the transmitting, after the load is connected, a voltage-ramping instruction to each of the PCSs subject to the black-start process comprises:
detecting that a total apparent power of all the PCSs is greater than a preset power threshold, suspending, by the BS, for detecting that the total apparent power falls below a preset apparent power, transmitting the voltage-ramping instruction to each of the PCSs, wherein the power threshold is greater than the preset apparent power.

6. A power generation system, comprising: a plurality of power conversion systems PCS; and
a black-start controller BS or an energy management system EMS, wherein
all or part of the plurality of PCSs are subject to a black start process, and alternating-current sides of the PCSs subject to the black start process are connected with each other in parallel for connecting a load,
the BS or the EMS is configured to transmit an instruction to ramp a voltage up to a first preset voltage to each of the power conversion systems PCS subject to the black-start process, the alternating-current sides of the PCS subject to the black-start process are connected with each other in parallel for connecting the load,
the black-start controller BS or the energy management system EMS is configured to detect that the voltage of each of the PCSs subject to the black-start process ramps up to the first preset voltage, transmit a load-connecting instruction to the energy management system; and transmit, after the load is applied, a voltage-ramping instruction to each of the PCSs subject to the black-start process, to cause the voltage of each of the PCSs subject to the black-start process to ramp from the first preset voltage to the second preset voltage, wherein the first preset voltage is less than a second preset voltage.

7. The power generation system according to claim 6, wherein the BS or the EMS is further configured to: before the BS or the EMS detects that the voltage of each of the PCSs subject to the black-start process ramps up to the first preset voltage, transmit, on receiving first black-start instructions from all the PCSs subject to the black-start process, a second black-start instruction to each of the PCSs subject to the black-start process, and suspend for receiving the second black-start instructions fed back from all the PCSs subject to the black-start process.

8. The power generation system according to claim 7, wherein the BS or the EMS transmits, on receiving first black-start instructions from all the PCSs subject to the black-start process, a second black-start instruction to each of the PCSs subject to the black-start process, and suspends for receiving the second black-start instructions fed back from all the PCSs subject to the black-start process as follows:
the BS receives the first black-start instruction fed back from a master PCS, and receives the first black-start instruction fed back from a slave PCS, wherein all the PCSs comprise the one master PCS and the slave PCS with the number of at least one; and
the BS or the EMS transmits the second black-start instruction to each of the at least one slave PCS, the BS receives the second black-start instruction fed back from the at least one slave PCS, then transmits the second black-start instruction to the master PCS, and suspends for receiving the second black-start instruction fed back from the master PCS.

9. The power generation system according to any one of claims 6 to 8, wherein the black-start controller BS or the EMS detects that the voltage of each of the PCSs subject to the black-start process ramps up to the first preset voltage and transmits a load-connecting instruction to the energy management system as follows:
the BS or the EMS detects that the voltage of each of the PCSs ramps up to the first preset voltage and remains at the first preset voltage, receives fourth black-start instructions transmitted by all the PCSs subject to the black-start process, and transmits the load-connecting instruction to the energy management system.

10. The power generation system according to any one of claims 6 to 8, wherein the BS or the EMS transmits, after the load is applied, a voltage-ramping instruction to each of the PCSs subject to the black-start process as follows:
the BS or the EMS detects that the total apparent power of all the PCSs is greater than a preset power threshold, the BS suspends for detecting that the total apparent power falls below a preset apparent power and transmits the voltage-ramping instruction to each of the PCSs, wherein the power threshold is greater than the preset apparent power.
